# EUROPEAN PATENT APPLICATION

(11) **EP 4 715 665 A1**
(43) Date of publication of application: **25.03.2026**
(21) Application number: 24306552.1
(22) Date of filing: 20.09.2024
(51) Int. Cl.: G06K 19/02, G06K 19/077

(54) **PRELAM BODY OF A SMART CARD, ASSOCIATED SMART CARD, ASSOCIATED PRELAM SHEET BODY, METHOD OF FORMING A PRELAM BODY OF A SMART CARD, METHOD OF FORMING A SMART CARD FOR A DATA PAGE OF AN IDENTITY DOCUMENT, AND METHOD OF FORMING AN IDENTITY DOCUMENT**

(71) Applicant: Linxens Holding, 78200 Mantes-la-Jolie (FR)
(72) Inventor: KHUSUWAN, Khiengkrai, Ayutthaya (TH); CHOTPAPHAWONG, Saichon, Ayutthaya (TH); CHANTHAWEE, Sarawut, Ayutthaya (TH)
(74) Representative: Grünecker Patent- und Rechtsanwälte PartG mbB

(57) **Abstract**

The present disclosure relates in various aspects to a prelam body of a smart card, an associated smart card, an associated prelam sheet body, a method of forming a prelam body of a smart card, a method of forming a smart card for a data page of an identity document, and a method of forming an identity document. In illustrative embodiments, the prelam body comprises a base substrate formed of at least one layer, wherein the base substrate has a base substrate recess completely extending through the base substrate, a first overlay sheet layer formed over a first side of the base substrate, wherein the first overlay sheet layer has a first recess completely extending through the first overlay sheet layer and being in alignment with the base substrate recess, and a elastic plug completely filling the base substrate recess and the first recess. The base substrate recess is of a bigger size compared to the first recess such that the base substrate recess completely overlaps the first recess.

## Description

### Field of the Disclosure

The present disclosure relates in various aspects to a prelam body of a smart card, an associated smart card, an associated prelam sheet body, a method of forming a prelam body of a smart card, a method of forming a smart card for a data page of an identity document, and a method of forming an identity document.

### Technological Background

Frequently, a security document of a booklet type may have at least one data page or sheet that carries sensitive data or information in combination with other pages or sheets, for instance in a passport, and the like. Therefore, the data page including the sensitive information may have to be combined with one or more other pages or sheets, for instance the cover of a passport, the additional pages in a passport, and the like, thereby imposing certain requirements on the data page in addition to the high tampering resistance thereof. For example, the security document may have to meet certain requirements regarding the handling thereof, the durability, for instance in opening and closing a passport, and generally resistance with respect to environmental conditions, and the like.

As security documents of the identity document type, such as identity document booklets (e.g., passports) and the like, increasingly include an electronic circuit with contactless reading. The electronic circuit comprises an electronic module or chip connected to an inductive or capacitive antenna integrated into the data page which is may be provided as a page in accordance with smart card technologies in the booklet. This type of data page can be used, for example, to store personal data concerning civil status and biometric data, as well as administrative data in digital form.

The effect of such security documents is that, when security documents are to be checked for verifying its validity, the stored data can be read and processed electronically by a receiving device or reader by means of a remote electronic coupling between the electronic circuit of a security document, often referred to as a transponder, and the reader. The use of contactless technologies in this context provides for significant advantages in lifetime and ergonomic terms.

There are generally a number of requirements to be fulfilled by the security document which also impose requirements on the data page. For example, when compiling the data page with other pages or sheets, a high degree of flexibility of a respective connecting portion may be required, for instance when considering a passport, which may have to be opened and closed frequently over a long time period of several years. Any such requirements may not be met by plastic materials commonly used for a smart card, such as polycarbonate. That is, a respective degree of flexibility, though required for a hinge portion connecting the data page with the remaining pages in the booklet, may not be realized for conventional data pages in terms of operability, durability, and the like. It is emphasized that a bonding of data pages into security documents, such as passports, is one of the key aspects for ensuring protection against copying and counterfeiting, while ensuring a sufficient lifetime of the security document during its lifetime, such as 10 years for an average passport. For example, the connection between the actual data page and a hinge material as well as the hinge material itself should have high mechanical robustness with respect to external forces, while nevertheless providing for a desired high flexibility and durability when considering long-term use of a respective security document.

In view of the above described situation, it is desirable to provide a data page and an identity document with securely included data page, as well as associated fabrication methods, which at least partially overcome the above issues and allow a stable integration of the data page into the booklet.

### Summary of the Disclosure

The issues and problems described in the context of the technological background of the present disclosure are at least partially resolved by a prelam body of a smart card in accordance with claim 1, a smart card for a data page of an identity document in accordance with claim 9, a prelam sheet body in accordance with claim 11, a method of forming a prelam body of a smart card in accordance with claim 13, a method of forming a smart card for a data page of an identity document in accordance with claim 18, and a method of forming an identity document in accordance with claim 20. Further advantageous embodiments are defined in the dependent claims 2 to 8, 10, 12, 14 to 17, and 19.

In the present disclosure, the expression "prelam body", as used herein, is understood as representing a material body with one or more layers of an insulating material, such as PVC, PC or some other appropriate thermoplastic polymer. In particular, the expression "prelam body" may be understood as denoting an inlay formed of one layer which is inserted into a recess of a body of a security document as an inlay of the security document (provided in appropriate dimensions), such as an inlay inserted into a smart card. Alternatively, the expression "prelam body" may denote multiple layers, which are pre-laminated together. In any case, a prelam body or prelaminated body may be considered as representing an intermediate product obtained during fabrication of a security document, e.g., a smart card. For example, an illustrative prelam body being formed of multiple layers may be obtained by fusing together different layers of a thermoplastic material into a single homogeneous sheet body, thereby forming a monolithic substrate body. In some illustrative examples of a prelam body, an inlay substrate (or base substrate) may have at least one contact and/or interconnection embedded therein, optionally with one or more electronic modules integrated into the substrate body in electric connection with at least one contact and/or interconnection of the inlay substrate.

In a first aspect of the present disclosure, a prelam body of or for a smart card is provided. In the illustrative embodiments of the first aspect, the prelam body comprises a base substrate formed of at least one layer, wherein the base substrate has a base substrate recess completely extending through the base substrate, a first overlay sheet layer formed over a first side of the base substrate, wherein the first overlay sheet layer has a first recess completely extending through the first overlay sheet layer and being in alignment with the base substrate recess, and an elastic plug, such as a thermoplastic elastomer plug made of a thermoplastic elastomer material and/or woven PET material and/or similar material(s), completely filling the base substrate recess and the first recess. The base substrate recess is of a bigger size compared to the first recess such that the base substrate recess completely overlaps the first recess. The elastic plug may represent a portion of the prelam body of higher elasticity compared to the remainder of the prelam body, thereby the elastic plug representing a hinge portion of the prelam body for providing a hinge portion in a smart card to be formed on the basis of the prelam body of the first aspect when fabricating an identify document comprising a booklet including a data page on the basis of the prelam body. The base substrate recess being of a bigger size compared to the first recess allows for an increased interfacing surface between the elastic plug. Herein, the alignment of the base substrate recess and the first recess is complete such that the base substrate recess completely overlaps the first recess. In other words, the first recess is, in a projective view along an axial direction of the first recess, completely contained within the base substrate recess, where the axial direction is given by a direction perpendicular to a plane spanned by the edge of the first recess. In special illustrative examples, the elastic plug may be formed as a thermoplastic polymer plug, e.g., comprising or made of thermoplastic polyurethane, and/or it may be formed of PET (such as woven PET), leading to a more advantageous thermoplastic elastomer plug or to an elastic plug formed of woven PET. In some illustrative examples, the base substrate and/or the first overlay layer may comprise polymer material(s). e.g., PC.

In some illustrative examples herein, the base substrate may support a chip module and/or at least one antenna, e.g., at least one RFID antenna and/or at least one UHF antenna. Herein, the first overlay sheet layer may be formed over the chip module on the first side of the base substrate. Accordingly, the prelam may be configured for electronic information storage and/or wireless interaction.

In some illustrative embodiments of the first aspect, the elastic plug may comprise a first elastic plug section completely filling the base substrate recess and a second elastic plug section completely filling the first recess, the first and second elastic plug sections being bonded together at an interface between the base substrate and the first overlay sheet layer. Accordingly, an increased bonding interface may be provided in the elastic plug, bonding interface not being limited by the size of the first recess. The first and second elastic plug sections are bonded along the interface to provide for a monolithic plug.

In some other illustrative embodiments of the first aspect, the prelam body may further comprise a second overlay sheet layer formed on the base substrate on a second side of the base substrate opposite the first side, the second overlay sheet layer having a second recess completely extending through the second overlay sheet layer and being in alignment with the base substrate recess. The second overlay sheet may allow to further increase an interface of the elastic plug in the prelam body. In special illustrative examples herein, the second recess may be of a smaller size compared to the base substrate recess, the base substrate recess completely overlapping the base substrate recess. Accordingly, the elastic plug may be more stably anchored in the prelam body, thereby increasing stability of the elastic plug in the prelam body.

In some other illustrative embodiments of the first aspect, the prelam body may further comprise an external sheet layer formed on the base substrate at the first side over the first overlay sheet layer, the external sheet layer having a third recess completely extending through the external sheet layer and being in alignment with the first recess. The external sheet may allow to further increase an interface of the elastic plug in the prelam body. In special illustrative examples herein, the third recess may be of a smaller size compared to the first recess, the first recess completely overlapping the third recess. Accordingly, the elastic plug may be more stably anchored in the prelam body, thereby increasing stability of the elastic plug in the prelam body. In a more advantageous example herein, the first and second recesses may be congruent or substantially congruent.

In some illustrative examples herein, the second overlay layer and/or the external layer may comprise polymer material(s). e.g., PC. For example, at least one of the first to second overlay sheet layers and/or the external layer and/or the base substrate may be at least partially of an optically transparent material and/or opaque material (e.g., a white layer) and/or semitransparent material.

In a second aspect of the present disclosure, a smart card for a data page of an identity document is provided. In the illustrative embodiments of the second aspect, the smart card may comprise the prelam body of the first aspect and additional layers formed over the prelam body, the prelam body being interposed between the additional layers. The additional layers may allow personalization of the smart card. In illustrative examples, the elastic plug of the prelam body may be cut when subjecting the prelam body to a cutting process. The cut elastic plug after the cutting process provides for the cut elastic plug being an edge of the smart card. For example, the smart card of the second aspect may have an edge which is completely formed of elastic plug, thereby representing an elastic edge of the smart card. Such an elastic edge of the smart card may serve as a hinge for the smart card when coupling it to a hinge portion of a booklet into which the smart card is integrated as a data page.

In some illustrative embodiments of the second aspect, the additional layers may be formed of a transparent and/or translucent material, such as a thermoplastic polymer, with preferably transparent or translucent properties, preferably a transparent and/or translucent PC and/or transparent and/or translucent PVC. Additionally or alternatively, each of the additional layers may have a thickness in the range from about 25 µm to about 150 µm. Additionally or alternatively, a number of additional layers may be determined together with an appropriate thickness so as to provide the smart card with a thickness in the range for about 450 µm to about 550 µm, such as a thickness of about 500 µm.

In some illustrative embodiments of the second aspect, the smart card may further comprise a security window in at least some of the overlay sheet layers, the security window exposing a surface portion of the base substrate and/or the security window showing a security imprint. For example, the security window may be provided by a transparent layer portion in a main surface of the smart card, at least partially extending through the smart card, the transparent window and/or the imprint optionally being formed at least in part of an optical variable material. The security window may be provided in accordance with a security window as described in the application WO 2022/058072 A1, the disclosure of which is incorporated by reference in its entirety, such as the disclosure with respect to material, dimensions and fabrication of the windows features described therein, for example, the disclosure of windows features on pages 2 to 5 with respect to material, dimensions and fabrication of window features in prelam bodies and smart cards and/or the disclosure of windows features on pages 6 to 15 with respect to material, dimensions and fabrication of window features in prelam bodies and smart cards. Furthermore, the security window may be provided in accordance with a security window as described in the application PCT/IB2023/000384, the disclosure of which is incorporated by reference in its entirety, such as the disclosure with respect to material, dimensions and fabrication of the windows features described therein.

In a third aspect of the present disclosure, a prelam sheet body is provided. In the illustrative embodiments of the third aspect, the prelam sheet body may comprise a plurality of the prelam bodies according to the first aspect arranged in a sheet body as a cut out pattern, the prelam bodies being arranged in a matrix arrangement with a plurality of rows arranged along a first direction with a plurality of prelam bodies arranged within each row along a second direction perpendicular to the first direction, wherein the prelam bodies of directly adjacent rows are offset and wherein the rows of prelam bodies provide pairs of rows in which prelam bodies in adjacent rows of each pair are arranged such that elastic plugs of the prelam bodies in the pair of rows are part of a common strip of elastic plugs. Accordingly, an asymmetric matrix arrangement of the prelam bodies is provided, the asymmetric arrangement allowing an easy lamination.

In some illustrative embodiments of the third aspects, the prelam bodies of each second row may be in alignment in each of the first and second directions. Herein, two adjacent prelam bodies in two neighboring rows of each pair of rows may share a common elastic plug. For example, the prelam bodies of each second row are aligned such that prelam bodies within each second line are in alignment along the first direction.

In a fourth aspect of the present disclosure, a method of forming a prelam body of or for a smart card is provided. For example, the method may form the prelam body of the first aspect of a smart card of the second aspect. In the illustrative embodiments of the fourth aspect, the method comprises preparing a base substrate formed of at least one layer, wherein the base substrate may optionally support a chip module, cutting out a base substrate recess in the base substrate, the base substrate recess completely extending through the base substrate, providing a first overlay sheet layer for arrangement over base substrate (for example, over the chip module, if present), cutting out a first recess in the first overlay sheet layer, the first recess completely extending through the first overlay sheet layer and being in alignment with the base substrate recess, inserting a first elastic plug section into the base substrate recess, arranging the first overlay sheet layer over a first side of the base substrate (e.g., over the chip module on the first side of the base substrate), inserting a second elastic plug section into the first recess, laminating the arrangement of the base substrate and the first overlay sheet layer, wherein the first and second elastic plug sections are bonded together at an interface between the base substrate and the first overlay sheet layer to form an elastic plug section extending through the base substrate recess and the first recess, wherein the base substrate recess is of a bigger size compared to the first recess and completely overlaps the first recess. Herein, the first and second elastic plug sections are bonded along the interface to provide for a monolithic plug. The elastic plug represents a portion of the prelam body of higher elasticity compared to the remainder of the prelam body, thereby the elastic plug representing a hinge portion of the prelam body for providing a hinge portion in a smart card to be formed on the basis of the prelam body of the first aspect when fabricating an identify document comprising a booklet including a data page on the basis of the prelam body. The base substrate recess being of a bigger size compared to the first recess allows for an increased interfacing surface between the elastic plug. In special illustrative examples, the elastic plug may be formed of a thermoplastic elastomer material, such as thermoplastic polyurethane, and/or a PET material, such as woven PET, and/or similar material(s), leading to a more advantageous elastic plug, such as a thermoplastic elastomer plug or an elastic plug comprising or made of woven PET. It is further noted that an increased bonding interface may be provided in the elastic plug not limited by the size of the first recess such that a monolithic plug after bonding has advantageous mechanical stability. In some illustrative examples, the base substrate and/or the first overlay layer may comprise polymer material(s). e.g., PC.

In some illustrative embodiments of the fourth aspect, the method may further comprise providing a second overlay sheet layer, cutting out a second recess in the second overlay sheet layer, the second recess completely extending through the second overlay sheet layer, arranging the second overlay sheet layer in an assembly fixture, providing the base substrate and arranged the base substrate within the assembly fixture on the second overly sheet such that the base substrate recess is in alignment with the second recess, inserting the first elastic plug section in the base substrate recess and the second recess, stacking the first overlay sheet layer over the base substrate (e.g., over the chip module of the base substrate) in the assembly fixture, and inserting the second elastic plug section into the first recess on top of and in contact with the first elastic plug section, wherein the second recess is of a smaller size compared to the base substrate recess and is completely overlapped by the base substrate recess. Accordingly, the elastic plug may be more stably anchored in the prelam body, thereby increasing stability of the elastic plug in the prelam body.

In some other illustrative embodiments of the fourth aspect, the first and second recesses may be congruent or substantially congruent.

In some other illustrative embodiments of the fourth aspect, the method may further comprise, after inserting the first elastic plug section, providing a external sheet layer, cutting out a third recess in the external sheet layer, the third recess completely extending through the external sheet layer, and arranging the external sheet layer in the assembly fixture on the first overlay sheet layer such that the second elastic plug section is inserted into the third recess, wherein the third recess is of a smaller size compared to the first recess. Accordingly, the elastic plug may be more stably anchored in the prelam body, thereby increasing stability of the elastic plug in the prelam body.

In some illustrative examples herein, the second overlay layer and/or the external layer may comprise polymer material(s). e.g., PC. For example, at least one of the first to second overlay layers and/or the external layer and/or the base substrate may be at least partially of an optically transparent material and/or opaque material and/or semitransparent material.

In a fifth aspect of the present disclosure, a method of forming a smart card for a data page of an identity document is provided, such as the data page in a booklet with the data page among a plurality of pages in the booklet, .e.g., a passport document. In the illustrative embodiments of the fifth aspect, the method may comprise forming a prelam body in accordance with the method of the fourth aspect, and forming additional layers over the prelam body, the prelam body being interposed between the additional layers. In illustrative examples, the elastic plug of the prelam body may be cut when subjecting the prelam body to a cutting process. The cut elastic plug after the cutting process provides for the cut elastic plug being an elastic edge of the smart card. For example, the smart card of the second aspect may have such an elastic edge which is completely formed of elastic plug, thereby representing an elastic edge of the smart card. Such an elastic edge of the smart card may serve as a hinge for the smart card when coupling it to a hinge portion of a booklet into which the smart card is integrated as a data page

In the illustrative embodiments of the fifth aspect, the additional layers may be formed of a transparent and/or translucent material, such as a thermoplastic polymer, with preferably transparent or translucent properties, preferably a transparent and/or translucent PC and/or transparent and/or translucent PVC. Additionally or alternatively, each of the additional layers may have a thickness in the range from about 25 µm to about 150 µm. Additionally or alternatively, a number of additional layers may be determined together with an appropriate thickness so as to provide the smart card with a thickness in the range for about 450 µm to about 550 µm, such as a thickness of about 500 µm.

In some illustrative embodiments of the fifth aspect, the method may further comprise a providing a security window in at least some of the overlay sheet layers, the security window exposing a surface portion of the base substrate and/or the security window showing a security imprint. For example, a security plug may be inserted into the security window as a kind of security imprint of the smart card. For example, the security window may be provided by a transparent layer portion in a main surface of the smart card, at least partially extending through the smart card, the transparent window and/or the imprint optionally being formed at least in part of an optical variable material. The security window may be provided in accordance with a security window as described in the application WO 2022/058072 A1, the disclosure of which is incorporated by reference in its entirety, such as the disclosure with respect to material, dimensions and fabrication of the windows features described therein, for example, the disclosure of windows features on pages 2 to 5 with respect to material, dimensions and fabrication of window features in prelam bodies and smart cards and/or the disclosure of windows features on pages 6 to 15 with respect to material, dimensions and fabrication of window features in prelam bodies and smart cards. Furthermore, the security window may be provided in accordance with a security window as described in the application PCT/IB2023/000384, the disclosure of which is incorporated by reference in its entirety, such as the disclosure with respect to material, dimensions and fabrication of the windows features described therein.

In the sixth aspect of the present disclosure, a method of forming an identity document is provided, such as a booklet with a data page among a plurality of pages in the booklet, .e.g., a passport document. Herein, the method may comprise preparing a smart card in accordance with the method of the fifth aspect and integrating the smart card as a data page of the document into the document by coupling the thermal elastomer plug to a hinge of the document. That is, the thermal elastomer plug serves as a hinge of the data page in the document. The document has a hinge and the hinge comprises the thermal elastomer plug. In some illustrative examples herein, the smart card may be integrated as a data page of a booklet into a booklet by coupling the thermal elastomer plug to a hinge of the booklet. Herein, a booklet is understood as indicating a plurality of pages which are connected by a hinge or hinge portion. The data page being connected to the hinge by the elastic plug allows turning over the data page as a page in the document, such as a page of the booklet.

In illustrative examples, the elastic plug of smart card may be obtained when cutting the prelam body in a cutting process. The cut elastic plug after the cutting process provides for the cut elastic plug being an edge of the smart card fabricated from the prelam body. For example, the smart card of the second aspect may have an edge which is completely formed of elastic plug, thereby representing a elastic edge of the smart card. The elastic edge of the data page then provides for the hinge of the data page in the document, the elastic edge being connected to the hinge of the document. Herein, the elastic edge represents a portion of the elastic plug of the prelam body on the basis of which the data page is formed, e.g., a cut elastic plug.

As used herein, a size of a recess may be understood as a dimension of the recess measured along a direction extending within a plane parallel to a recess plane defined by an edge of the recess. For example, the size of a recess may be understood as a diameter of the recess along a direction along which a smallest dimension of the recess is measured in the recess plane. In case of the edge of the recess not defining a plane, a best fit plane with respect to the edge of the recess may be used as the recess plane.

In any of the aspects above, an alignment among the recesses in a prelam body is such that a recess of a bigger size is understood as completely overlapping any recess of smaller size in a projective view along an axial direction of a hole formed of the recesses. The axial direction is understood as being given by a direction perpendicular to a plane spanned by an edge of a recess, e.g., the base substrate recess.

In any of the aspects above, an elastic plug may be understood as representing a plug portion of a prelam body, e.g., an edge portion (that is a portion at an edge), having a higher mechanical elasticity compared to at least the base substrate or the base substrate and the overlay sheet layer(s).

### Brief Description of the Drawings

Various illustrative embodiments and other advantages of the various aspects of the present disclosure will become apparent from the detailed description of the accompanying Figures as presented below.
Figure 1 schematically shows a prelam body in accordance with some illustrative embodiments of the present disclosure.
Figure 2 schematically shows a prelam body sheet in accordance with some other illustrative embodiments of the present disclosure.
Figure 3 schematically shows a cross sectional view of line 1-1 in the prelam body sheet of Figure 2.
Figure 4 schematically shows a document in accordance with some illustrative embodiments in a sectional view.

The Figures accompanying the present disclosure are only provided for schematically showing some concepts and aspects of the present disclosure without showing all possible details of certain embodiments and without necessarily being actually to scale.

### Detailed Description of Preferred Embodiments

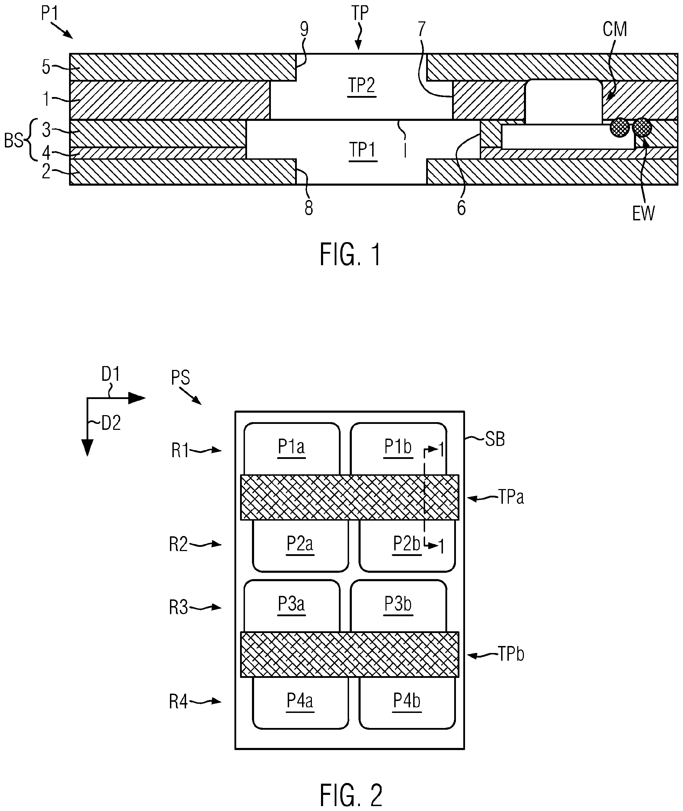

Referring to Figure 1, a prelam body P1 of a smart card (not illustrated) is schematically shown in a sectional view. The prelam body P1 comprises a base substrate BS which may support a chip module CM including an antenna pattern formed of an embedded wiring EW. Additionally or alternative to the chip module CM, one or more contacts (not illustrated) and interconnections (not illustrated) may be at least partially embedded into the base substrate BS. The base substrate BS may be interposed between two overlay sheet layers 1 and 2 which are formed on opposite sides of the base substrate BS. In particular, the base substrate BS is sandwiched between the two overlay sheet layers 1 and 2. For example, the overlay sheet layer 1 may be formed on an upper surface of the base substrate BS, while the overlay sheet layer 2 is formed on a bottom surface of the base substrate BS.

As shown in Figure 1, the base substrate BS may comprise two substrate layers 3, 4. The layers 3 and 4 may be mounted together, e.g. the layer 4 representing an inlay sheet on or over which the chip module may be arranged and the layer 3 representing a top sheet into which the chip module CM is at least partially embedded and/or the embedded wiring EW is at least partially embedded. In accordance with some illustrative examples, the layer 3 may be provided by a transparent PC layer having a thickness in a region from 100µm to about 200 µm preferably, with a thickness of about 150µm. The layer 4 may be provided by a transparent PC layer having a thickness in the region of about 50 µm to about 250 µm, preferably at about 100 µm. This does not pose any limitation and PVC may be employed instead of PC without deviating from the scope of the present disclosure.

In alternative embodiments (not illustrated), the base substrate BS2 may only be formed by one of the layers 3 and 4 or the base substrate BS may be formed by more than the two layers 3 and 4.

On one side of the base substrate BS (the downside with respect to the chip module CM), only the overlay sheet layer 2 may be formed, while on the upper side of the base substrate BS (the side on which the chip module CM is exposed in the base substrate BS), more than one overlay sheet layer is formed, such as the overlay layers 1 and 5.

In accordance with some illustrative examples herein, at least one of the overlay sheet layers 1, 2, and 5 may be formed by a PC or PVC material layer. For example, at least one of the overlay sheet layers 1, 2, and 5 may be formed of an opaque material, for example, white PC and/or white PVC, or any other colored opaque PC or PVC material. Furthermore, in case of one of the overlay sheet layers 1, 2, and 5 being formed by an opaque material, at least one other of the overlay sheet layers 1, 2, and 5 may be formed by a transparent or translucent material, e.g., similar or equal to the material of the base substrate BS. For example, at least one side of the base substrate BS may be covered by an opaque material.

In accordance with some special illustrative examples herein, each of the overlay sheet layers 1, 2, and 5 may have a thickness in the range of 20 µm to 80 µm, preferably with a thickness of about 50 µm. The person skilled in the art will appreciate that specific values depend on an overall design of a prelam body P1 and that a thickness of less than about 20 µm or more than about 80 µm may be used instead.

In some illustrative embodiments, the base substrate BS may be formed of a transparent material and/or a translucent material, such as transparent PC and/or translucent PC and/or transparent PVC and/or translucent PVC. Accordingly, the base substrate may have advantageous mechanical and optical properties.

With reference to Figure 1, the overlay sheet layer 1 is formed over the chip module CM on the upper side of the base substrate BS and has a recess 7 completely extending through the overlay sheet layer 1. The recess 7 is in alignment with a base substrate recess 6 extending completely through the base substrate BS. The base substrate recess 6 is of a bigger size compared to the recess 7 such that the base substrate recess 6 completely overlaps the recess 7. The overlay sheet layer 2 has a recess 8 extending completely through the overlay sheet layer 2. The recess 8 is of a smaller size compared to the base substrate recess 6 such that the base substrate recess 6 completely overlaps the recess 8. The overlay sheet layer 5 has a recess 9 extending completely through the overlay sheet layer 5. The recess 9 is of a smaller size compared to the recess 7 such that the recess 7 completely overlaps the recess 9. The recesses 6 to 9 are in complete alignment such that the recess with smallest diameter constitutes the minimum diameter of a hole formed by the recesses 6 to 9 in the prelam body P1. In some illustrative but non-limiting examples, the recesses 8 and 9 may be congruent or substantially congruent. In some illustrative but non-limiting example, the recess 9 may be coaxially aligned with the recess 7 such that the recess 9 may be coaxially centered within the recess 7 in a projective view along a center axis extending through the recesses 6 to 9.

The prelam body P1 further comprises a elastic plug TP completely fills the hole constituted by the recesses 6 to 9 such that the elastic plug TP completely fills each of the recesses 6 to 9. For example, the thermoplastic elastomer plug TP may be formed of thermoplastic polyurethane. For example, the elastic plug TP may be a thermoplastic elastomer plug made of a thermoplastic elastomer material or it may be an elastic plug made of or comprising woven PET material,

With ongoing reference, the elastic plug TP may be formed of a first elastic plug section TP1 completely filling the base substrate recess 6 and the recess 8, and a second elastic plug section TP2 completely filling the recesses 7 and 9, wherein the first and second elastic plug sections TP1 and TP2 are bonded together at an interface I between the base substrate BS and the overlay sheet layer 1. Accordingly, the interface I may be decoupled from the size of the recesses 8 and 9 such that an increases interface I for improved bonding between the first and second elastic plug sections TP1 and TP2 is provided, while an interface of the elastic plug TP within the hole constituted by the recesses 6 to 9 of the prelam body P1 is increased. Thereby, the elastic plug TP may be anchored as a monolithic plug after bonding by lamination with increased stability in the prelam body P1.

With respect to Figure 1, the prelam body P1 may be formed in a process as follows, using an assembly fixture (not illustrated) in which the prelam body P1 may be formed by arranging the overlay sheet layers and the base substrate BS in the assembly fixture (not illustrated):
The base substrate BS may be provided, the base substrate BS supporting the chip module CM and the base substrate recess 6 may be cut out in the base substrate BS such that the base substrate recess 6 extends completely through the base substrate BS.

The overlay sheet layer 1 may be provided for arrangement in the assembly fixture over the chip module CM at the upper side of the base substrate BS and the recess 7 may be cut out in the overlay sheet layer 1, wherein the recess 7 completely extends through the overlay sheet layer 1. The recess 7 is cut out at a location in the overlay sheet layer 1 so as to be in alignment with the base substrate recess 6 when arranging the overlay sheet layer 1 and the base substrate BS in a stacking arrangement.

Each of the first and second elastic plug sections TP1 and TP2 are prepared from elastic material on the basis of the recesses in the base substrate BS and the overlay sheet layer 1.

The first elastic plug section TP1 may be inserted into the base substrate recess 6.

The overlay sheet layer 1 is arranged over the chip module CM on the base substrate BS and the second elastic plug section TP2 is inserted into the recess 7, wherein the first and second elastic plug sections TP1 and TP2 are brought into contact along the interface I and bonded together into a monolithic plug TP.

The arrangement of the base substrate BS and the overlay sheet layer 1 in the assembly fixture may be laminated, wherein the first and second elastic plug sections TP1 and TP2 are bonded together at the interface I between the base substrate BS and the overlay sheet layer 1 to form a elastic plug portion by a monolithic plug portion extending through the base substrate recess 6 and the recess 7.

Accordingly, it is possible to provide for a modified prelam body when compared to the prelam body P1, the modified prelam body only comprising the base substrate BS and the overlay sheet layer 1 with an appropriately designed elastic plug TP.

In the fabrication of the prelam body P1, the above described process further comprises the following steps:
Providing the overlay sheet layer 2 and cutting out the recess 8 in the overlay sheet layer 2, the recess 8 completely extending through the overlay sheet layer 2.

The overlay sheet layer 2 is arranged in the assembly fixture and the base substrate BS is arranged within the assembly fixture on the overly sheet layer 2 such that the base substrate recess 6 is in alignment with the recess 8.

The second elastic plug section TP2 is inserted in the base substrate recess 6 and the recess 8.

The overlay sheet layer 1 is stacked over the chip module CM of the base substrate BS in the assembly fixture.

The second elastic plug section TP2 is inserted into the recess 7 on top of and in contact with the second elastic plug section TP1.

After inserting the second elastic plug section TP2, the overlay sheet layer 5 may be provided and the third recess 9 may be cut out in the overlay sheet layer 5, wherein the recess 9 completely extends through the overlay sheet layer 5. In some illustrative but non-limiting example, the recess 9 may be coaxially aligned with the recess 7 such that the recess 9 may be coaxially centered within the recess 7 in a projective view along a center axis extending through the recesses 6 to 9.

The overlay sheet layer 5 may be arranged in the assembly fixture on the overlay sheet layer 1 such that the second elastic plug section TP2 is inserted into the recess 9.

Referring to Figure 2, a prelam sheet body PS is schematically illustrated in a top view. The prelam sheet body PS comprises a plurality of prelam bodies P1a, P1b, P2a, P2b, P3a, P3b, P4a, and P4b indicated on the sheet body SB by a cut out pattern. The sheet body SB be a prelaminated body of sheet materials including a base substrate (not illustrated in Figure 2) and overlay sheet layers between which the base substrate is interposed. For example, the sheet body SB may comprise a base substrate in correspondence with the base substrate BS and the overlay sheet layers 1, 2, and 5 described above, the disclosure of which being incorporated by reference in its entirety. The sheet body SB may be a sheet providing the plurality of prelam bodies P1a, P1b, P2a, P2b, P3a, P3b, P4a, and P4b. However, this does not impose any limitation and the sheet body SB may be a band. The number of prelam bodies is not limiting and any number of prelam bodies may be provided by the sheet body SB, depending on the size of the sheet body SB and the size of individual prelam bodies to be manufactured.

For example, the cut out pattern may be provided by marking in at least one surface of the sheet body SB and/or by electronic data saved in a memory providing electronic instructions to an automated cutting machine or punching machine or stamping machine as machine readable data. Additionally or alternatively, the cut out pattern may be provided by structural features such as a pattern of indentions and/or recesses in the sheet body SB along which the prelam bodies P1a, P1b, P2a, P2b, P3a, P3b, P4a, and P4b may be cut or punched or stamped out. The person skilled in the art will appreciate that "cut" may be understood as cut or punch or mill or stamp.

With ongoing reference to Figure 2, the prelam bodies P1a, P1b, P2a, P2b, P3a, P3b, P4a, and P4b are arranged in a matrix arrangement with a plurality of rows R1, R2, R3, R4 in which subsets of prelam bodies are arranged along a direction D1, whereas the rows R1, R2, R3, R4 are stacked along a direction D2 perpendicular to the direction D1. In other words, the rows R1, R2, R3, R4 are arranged in the direction D2 and each row extends along the first direction D1, wherein each row comprises an associated subset of prelam bodies arranged in a series along the direction D1 in each row. The directions D1 and D2 are perpendicular directions within a plane parallel to a main surface of the sheet body SB, such as an upper exposed surface of the sheet body SB.

For example, the row R1 may comprise the prelam bodies P1a and P1b (or even more prelam bodies, though not illustrated for ease of illustration) arranged in a series along the first direction D1. The row R2 may comprise the prelam bodies P2a and P2b (or even more prelam bodies, though not illustrated for ease of illustration) arranged in a series along the first direction D1. The row R3 may comprise the prelam bodies P3a and P3b (or even more prelam bodies, though not illustrated for ease of illustration) arranged in a series along the first direction D1. The row R4 may comprise the prelam bodies P4a and P4b (or even more prelam bodies, though not illustrated for ease of illustration) arranged in a series along the first direction D1.

The prelam sheet body PS further comprises strips of elastic plugs TPa and TPb which are arranged between two neighboring rows of prelam bodies such that each strip of elastic plugs TPa, TPb may be seen as overlaying a virtual mirror symmetry line in a pair of rows with prelam bodies of one row of the pair of rows being mirror symmetric with respect to the prelam bodies of other row of the pair of rows. Herein, the prelam bodies of the pair of rows may be provided as sharing a common strip of elastic plugs. That is, the rows R1 and R2 provide for a pair of rows with the common strip of elastic plugs TPa, the rows R3 and R4 providing for another pair of rows with the common strip of elastic plugs TPb. The prelam body P1a of row R1 and the prelam body P2a of row R2 are mirror symmetric oriented with respect to each other, similarly for the other prelam bodies P1b and P2b in the pair of rows R1 and R2. The prelam body P3a of row R3 and the prelam body P4a of row R4 are mirror symmetric oriented with respect to each other, similarly for the other prelam bodies P3b and P4b in the pair of rows R3 and R4.

In the matrix arrangement of the prelam sheet body PS, that is, the rows R1 to R4 of prelam bodies, the elastic plugs TPa and TPb are provided by parallel strips. Each of the strips of elastic plugs TPa and TPb may be formed in accordance with the elastic plug TP as described above with respect to Figure 1, the disclosure of which is incorporated in its entirety by reference.

The above described matrix arrangement may be symmetric matrix arrangement which is not illustrated in Figure 2 or it may be an asymmetric matrix arrangement as described below with ongoing reference to Figure 2 in greater detail. Herein, the prelam bodies of directly adjacent rows, such as rows R1 and R2 or R3 and R4 (i.e., the rows of each pair of rows) may be offset as explicitly illustrated in Figure 2. That means that the rows of prelam bodies provide pairs of rows R1, R2 and R3, R4 as described above. In each of the pairs R1, R2 and R3, R4 there are prelam bodies arranged in an asymmetric manner, slightly breaking a mirror symmetry such that prelam bodies P1a and P2a are not exactly mirror symmetric but prelam body P2a is offset along the direction D1 with respect to a mirror image of prelam body P1a, though sharing the common strip of elastic plug TPa. Similarly, prelam bodies P1b and P2b are not exactly mirror symmetric but prelam body P2b is offset along the direction D1 with respect to a mirror image of prelam body P1b, though sharing the common strip of elastic plug TPa. In analogy, prelam bodies P3a and P4a are not exactly mirror symmetric in the pair of rows R3, R4, but prelam body P4a is offset along the direction D1 with respect to a mirror image of prelam body P3a, though sharing the common strip of elastic plug TPb, while prelam body P4b being offset along the direction D1 with respect to a mirror image of prelam body P3b (though sharing the common strip of elastic plug TPb). An according asymmetric arrangement was found by the inventors to facilitate lamination.

In the asymmetric arrangement, the prelam bodies of each second row, that is rows R1 and R3 versus R2 and R4, are in complete alignment with respect to each other such that the prelam bodies P1a and P3a are related by a shift only in the direction D2. Similarly, the prelam bodies P1b and P3b, P2a and P4a, and P2b and P4b are related by shifts only in the direction D2. Accordingly, a repetitive pattern of prelam bodies may be easily realized for the prelam sheet body PS.

The prelam sheet body PS may be fabricated in accordance with the steps disclosed above in the context of Figure 1 for forming the prelam body P1, applying the steps associated with the prelam body P1 accordingly to the sheet body SB, amounting to the steps as disclosed in the context of Figure 1 being performed with respect to each prelam body of the prelam sheet body PS.

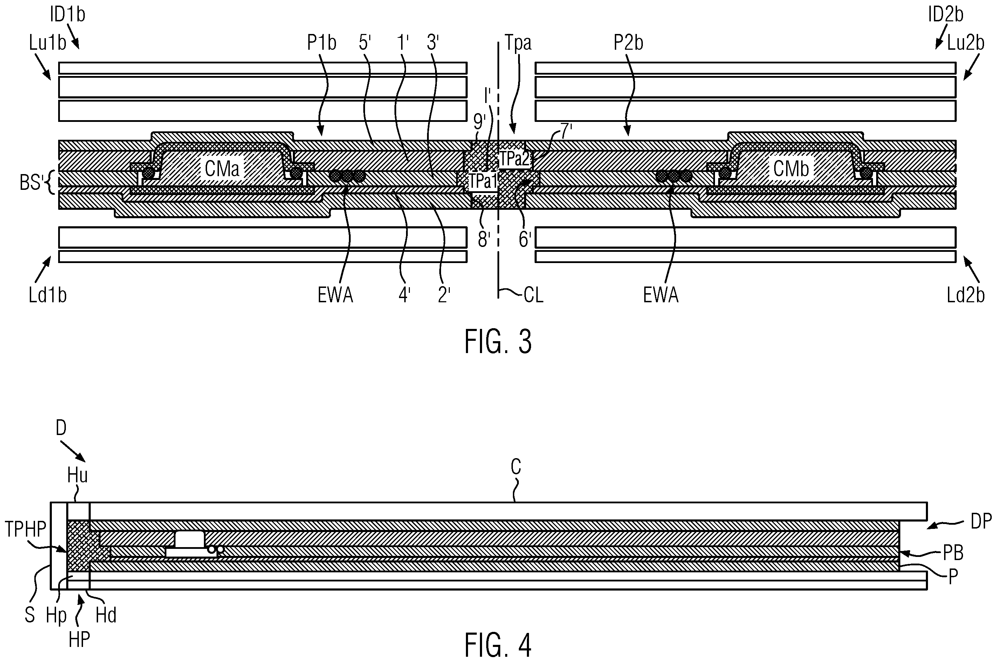

Referring to Figure 3, a sectional view along line 1-1 in Figure 2 is schematically illustrated, showing a sectional view of the prelam bodies P1b and P2b with the common strip of elastic plug TPa. Figure 3 further illustrated schematically additional layers Lu1b, Lu2b, Ld1b, and Ld2b which are formed in a subsequent processing after provision of the prelam sheet body PS of Figure 2 over and underneath of the prelam bodies P1b and P2b, respectively, leaving the common strip of elastic plug TPa uncovered. When forming the additional layers Lu1b, Lu2b, Ld1b, and Ld2b over and underneath of the prelam bodies P1b and P2b and cutting along the cutting line CL to singulate the prelam sheet body PS with additional layers, singulated smart cards ID1b and ID2b are provided. In particular, the smart card ID1b is formed on the basis of the prelam sheet body P1b and comprises the prelam sheet body P1b and additional layers Lu1b, Ld1b between which the prelam sheet body P1b is interposed, as a laminated body after subjecting the prelam sheet body P1b with the additional layers Lu1b, Ld1b formed on its main surfaces, to a lamination process. The smart card ID1b has the cut elastic plug at one of its edges, thereby equipping the smart card ID1b with a elastic plug edge.

Similarly, the smart card ID2b is formed on the basis of the prelam sheet body P2b and comprises the prelam sheet body P2b and additional layers Lu2b, Ld2b between which the prelam sheet body P2b is interposed, as a laminated body after subjecting the prelam sheet body P2b with the additional layers Lu2b, Ld2b formed on its main surfaces, to a lamination process. The smart card ID2b has the cut elastic plug at one of its edges, thereby equipping the smart card ID2b with a elastic plug edge.

The smart card ID1b and/or the smart card ID2b may a final product or may represent an intermediate product subjected to further processing for providing a security document including a data page based on a smart card as will be described below in the context of Figure 4 in greater detail.

Referring to Figures 2 and 3, the prelam sheet body PS in Figure 2 comprising the prelam bodies P1b and P2b of Figures 2 and 3 may be fabricated in a process as follows, using an assembly fixture (not illustrated) in which the prelam sheet body PS may be formed by arranging overlay sheet layers and a base substrate in the assembly fixture (not illustrated):
A base substrate BS' (for example, corresponding to the base substrate BS described above) may be provided, the base substrate BS' supporting optional chip modules CMa and CMb with optional antenna wirings EWA in regions of different prelam bodies to be formed in compliance with the prelam bodies P1b and P2b of the finished prelam sheet body PS. The base substrate BS' may comprise at least one layer, e.g., layers 3' and 4' in analogy with layers 3 and 4 above.

A base substrate recess 6' may be cut out in the base substrate BS' such that the base substrate recess 6' extends completely through the base substrate BS'.

An overlay sheet layer 1' (for example, corresponding to the overlay sheet layer 1 described above) may be provided for arrangement in the assembly fixture over the chip modules CMa and CMb at the upper side of the base substrate BS'. A recess 7' may be cut out in the overlay sheet layer 1', wherein the recess 7' completely extends through the overlay sheet layer 1'. The recess 7' is cut out at a location in the overlay sheet layer 1' so as to be in alignment with the base substrate recess 6' when arranging the overlay sheet layer 1' and the base substrate BS' in a stacking arrangement.

First and second elastic plug sections TPa1 and TPa2 (for example, corresponding to the first and second elastic plug sections TP1 and TP2 described above) are prepared from elastic material on the basis of the recesses in the base substrate BS' and the overlay sheet layer 1'.

The first elastic plug section TPa1 may be inserted into the base substrate recess 6'.

The overlay sheet layer 1' is arranged over the chip modules CMa and CMb on the base substrate BS' and the second elastic plug section TPa2 is inserted into the recess 7', wherein the first and second elastic plug sections TPa1 and TPa2 are brought into contact along an interface I'.

The arrangement of the base substrate BS' and the overlay sheet layer 1' in the assembly fixture may be laminated, wherein the first and second elastic plug sections TPa1 and TPa2 are bonded together at the interface I' between the base substrate BS' and the overlay sheet layer 1' to form the elastic plug TPa extending through the base substrate recess 6' and the recess 7'. Thus, the elastic plug sections TPa1 and TPa2 are bonded into a monolithic plug portion for providing the elastic plug TPa.

Accordingly, it is possible to provide for a modified prelam body when compared to the prelam body PS shown in the sectional view of Figure 3, the modified prelam body only comprising the base substrate BS' and the overlay sheet layer 1' with an appropriately designed elastic plug.

In the fabrication of the prelam sheet body PS, the above described process further comprises the following steps:
Providing an overlay sheet layer 2' (for example, corresponding to the overlay sheet layer 2 described above) and cutting out a recess 8' in the overlay sheet layer 2', the recess 8' completely extending through the overlay sheet layer 2'.

The overlay sheet layer 2' is arranged in the assembly fixture (not illustrated) and the base substrate BS' is arranged within the assembly fixture (not illustrated) on the overly sheet layer 2' such that the base substrate recess 6' is in alignment with the recess 8'.

The second elastic plug section TPa2 is inserted in the base substrate recess 6' and the recess 8'.

The overlay sheet layer 1' is stacked over the chip modules CMa and CMb of the base substrate BS' in the assembly fixture (not illustrated).

The second elastic plug section TPa2 is inserted into the recess 7' on top of and in contact with the second elastic plug section TPa1.

After inserting the second elastic plug section TPa2, an overlay sheet layer 5' (for example, corresponding to the overlay sheet layer 5 described above) may be provided. A third recess 9' may be cut out in the overlay sheet layer 5', wherein the recess 9' completely extends through the overlay sheet layer 5'. In some illustrative but non-limiting example, the recess 9' may be coaxially aligned with the recess 7' such that the recess 9' may be coaxially centered within the recess 7' in a projective view along a center axis extending through the recesses 6' to 9'.

The overlay sheet layer 5' may be arranged in the assembly fixture (not illustrated) on the overlay sheet layer 1' such that the second elastic plug section TPa2 is inserted into the recess 9'.

Subsequently, singulation into individual prelam bodies P1b and P2b may be performed by cutting along the cutting line CL before or after forming the additional layers Lu1b, Ld1b, Lu2b, Ld2b as disclosed above.

In some illustrative embodiments, the additional layers Lu1b, Ld1b, Lu2b, and Ld2b may be formed of a transparent and/or translucent material, such as a thermoplastic polymer, with preferably transparent or translucent properties, preferably a transparent and/or translucent PC and/or transparent and/or translucent PVC. Additionally or alternatively, each of the additional layers Lu1b, Ld1b, Lu2b, and Ld2b may have a thickness in the range from about 25 µm to about 150 µm. Additionally or alternatively, a number of the additional layers Lu1b, Ld1b, Lu2b, and Ld2b may be determined together with an appropriate thickness so as to provide the smart card ID1b and/or ID2b with a thickness in the range for about 450 µm to about 550 µm, such as a thickness of about 500 µm.

With reference to Figure 3, at least one of the prelam bodies P1b and P2ba may be provided with at least one of security windows (not illustrated). The security window(s) (not illustrated) may be each a security feature where an opening is formed through the overlay sheet layer(s) on one side of the prelam body P1b, P2b, for example, exposing a surface portion of the prelam body P1b, P2b, and inserting a security element, e.g., a plug with or without imprint etc., into the opening. Additionally or alternatively, the security window(s) (not illustrated) may be each a security feature where an opening is formed through the overlay sheet layer(s) on one side of the prelam body P1b, P2b, for example, exposing a surface portion of the prelam body P1b, P2b, and forming a security imprint in the opening covered by a transparent window layer portion provided in layer 2'. The transparent window and/or the imprint may be formed of an optical variable material.

Referring to Figure 4, an identity document D is schematically shown in a sectional view. The document D comprises a data page DP and optionally one or more pages P, e.g., made of paper, paper based material etc. The document D may further comprise an optional cover C providing a front cover and/or a back cover. The cover C further comprises a spine S to which a front cover may be attached via a hinge Hu and a back cover may be attached via a hinge Hd.

The data page DP may be provided by a smart card, such as the smart card ID1b or ID2b described above. As shown in Figure 4, the data page DP comprises a prelam body PB, such as at least one of the prelam bodies P1, P1b, P2b as described above. The data page DP is connected to the optional pages P and/or the cover C by a elastic plug TPHP which provides for a hinge portion of the data page connected to the hinges Hu, Hd, and a hinge Hp of the optional pages P, the hinges Hu, Hd, Hp together with the elastic plug TPHP realizing a hinge portion HP of the document D.

The document D may be formed in a process, comprising preparing a smart card, such as the smart card ID1b, ID2b in accordance with the disclosure above to Figure 3, and integrating the smart card as the data page DP into the document. For example, the document D may be a booklet with additional page(s) P, such that the data page DP is coupled to the additional page(s) P via the elastic plug TPHP coupling to the hinge Hp of the additional page(s) P. Additionally or alternatively, the document D only comprises the cover C (with at least one of front cover and back cover), the cover allowing to protect the data page against unintended visual exposure to other persons and/or protection of the data page against mechanical wear and/or sun light exposure. The cover C may be coupled to the data page DP via the elastic plug TPHP coupling to the hinge(s) Hu, Hd of the cover C.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the subranges contained therein unless context or language indicates otherwise. "Approximately" or "substantially" as applied to a particular value of a range applies to both values, and unless otherwise dependent on the precision of the instrument measuring the value, may indicate +/- 10% of the stated value(s).

## Claims

1. A prelam body (P1; P1b; P2b; P) of a smart card (ID1b; ID2b), the prelam body (P1; P1b; P2b) comprising:
a base substrate (BS; BS') formed of at least one layer (3, 4), wherein the base substrate (BS;BS') has a base substrate recess (6; 6') completely extending through the base substrate (BS; BS), the base substrate (BS; BS') preferably supporting a chip module (CM; CMa; CMb);
a first overlay sheet layer (1; 1') formed over a first side of the base substrate (BS; BS'), wherein the first overlay sheet layer (1, 1') has a first recess (7; 7') completely extending through the first overlay sheet layer (1; 1') and being in alignment with the base substrate recess (6; 6'); and
a elastic plug (TP; TPa; TPb; TPHP) completely filling the base substrate recess (6; 6') and the first recess (7; 7'),
wherein the base substrate recess (6; 6') is of a bigger size compared to the first recess (7; 7') so that the base substrate recess (6; 6') completely overlaps the first recess (7; 7').

2. The prelam body (P1; P1b; P2b; P) of claim 1, wherein the elastic plug (TP; TPa; TPb;
TPHP) is formed of a thermoplastic elastomer material, such as thermoplastic polyurethane, and/or PET material, such as woven PET, and/or
wherein at least one of the base substrate (BS; BS') and/or the first overlay layer (1; 1') may comprise a polymer material, such as polycarbonate.

3. The prelam body (P1; P1b; P2b; P) of claim 1 or 2, wherein the elastic plug (TP; TPa; TPb; TPHP) comprises a first elastic plug section (TP1; TPa1) completely filling the base substrate recess (6; 6') and a second elastic plug section (TP2; TPa2) completely filling the first recess (7; 7'), the first and second elastic plug sections (TP1, TP2; TPa1, TPa2) being bonded together at an interface (I; I') between the base substrate (BS; BS') and the first overlay sheet layer (1; 1').

4. The prelam body (P1; P1b; P2b; P) of one of claims 1 to 3, further comprising a second overlay sheet layer (2; 2') formed on the base substrate (BS; BS') on a second side of the base substrate (BS; BS') opposite the first side, the second overlay sheet layer (2; 2') having a second recess (8; 8') completely extending through the second overlay sheet layer (2; 2') and being in alignment with the base substrate recess (6; 6').

5. The prelam body (P1; P1b; P2b; P) of claim 4, wherein the second recess (8; 8') is of a smaller size compared to the base substrate recess (6; 6'), the base substrate recess (6; 6') completely overlapping the second recess (8; 8').

6. The prelam body (P1; P1b; P2b; P) of one of claims 1 to 5, further comprising a external sheet layer (5; 5') formed on the base substrate (BS; BS') at the first side over the first overlay sheet layer (1; 1'), the external sheet layer (5; 5') having a third recess (9; 9') completely extending through the external sheet layer (1; 1') and being in alignment with the first recess (9; 9').

7. The prelam body (P1; P1b; P2b; P) of claim 6, wherein the third recess (9; 9') is of a smaller size compared to the first recess (7; 7'), the first recess (7; 7') completely overlapping the third recess (9; 9').

8. The prelam body (P1; P1b; P2b; P) of claim 6 or 7 in combination with claim 4 or 5, wherein the first and second recesses (7, 8; 7', 8') are congruent or substantially congruent.

9. A smart card (ID1b; ID2b) for a data page of an identity document (D), comprising:
the prelam body (P1b; P2b; P) of one of claims 1 to 8; and
additional layers (Lu1b, Ld1b; Lu2b, Ld2b) formed over the prelam body (P1b; P2b; P), the prelam body (P1b; P2b; P) being interposed between the additional layers (Lu1b, Ld1b; Lu2b, Ld2b).

10. The smart card (ID1b; ID2b) of claim 9, wherein the additional layers (Lu1b, Ld1b; Lu2b, Ld2b) are formed of a transparent and/or translucent material, such as a thermoplastic polymer, with preferably transparent or translucent properties, preferably a transparent and/or translucent PC and/or transparent and/or translucent PVC; and/or
wherein each of the additional layers (Lu1b, Ld1b; Lu2b, Ld2b) has a thickness in the range from about 25 µm to about 150 µm; and/or
wherein a number of additional layers (Lu1b, Ld1b; Lu2b, Ld2b) is determined together with an appropriate thickness so as to provide the smart card (Id1; ID2) with a thickness in the range for about 450 µm to about 550 µm, such as a thickness of about 500 µm.

11. A prelam sheet body (PS), comprising a plurality of the prelam bodies (P1a, P1b, P2a, P2b, P3a, P3b, P4a, P4b), each of which being provided in accordance with at least one of claims 1 to 8 arranged in a sheet body (SB) as a cut out pattern, the prelam bodies (P1a, P1b, P2a, P2b, P3a, P3b, P4a, P4b) being arranged in a matrix arrangement with a plurality of rows (R1, R2, R3, R4) arranged along a first direction (D2) with a plurality of prelam bodies (P1a, P1b; P2a, P2b; P3a, P3b; P4a, P4b) arranged within each of the rows (R1, R2, R3, R4) along a second direction (D1) perpendicular to the first direction (D2), wherein the prelam bodies of directly adjacent rows are offset and wherein the rows of prelam bodies provide pairs of rows (R1, R2; R3, R4) in which prelam bodies in adjacent rows of each pair are arranged such that elastic plugs (TPa; TPb) of the prelam bodies in each pair of rows are part of a common strip of elastic plugs.

12. The prelam sheet body (PS) according to claim 11, wherein the prelam bodies of each second row are in alignment in each of the first and second directions (D1, D2).

13. A method of forming a prelam body (P1; P1b; P2b; P) of a smart card (ID1b; ID2b), the method comprising:
preparing a base substrate (BS; BS') formed of at least one layer (3, 4; 3,', 4'), wherein the base substrate (BS; BS') preferably supports a chip module (CM; CMa; CMb);
cutting out a base substrate recess (6; 6') in the base substrate (BS; BS'), the base substrate recess (6; 6') completely extending through the base substrate (BS; BS');
providing a first overlay sheet layer (1; 1') for arrangement over the base substrate (BS; BS');
cutting out a first recess (7; 7') in the first overlay sheet layer (1; 1'), the first recess (7; 7') completely extending through the first overlay sheet layer (1; 1') and being in alignment with the base substrate recess (6; 6');
inserting a first elastic plug section (TP1; TPa1) into the base substrate recess (6; 6');
arranging the first overlay sheet layer (1; 1') over a first side of the base substrate (BS; BS');
inserting a second elastic plug section (TP2; TPa2) into the first recess (7; 7'), wherein the first and second elastic plug sections (TP1, TP2; TPa1, TPa2) are brought into contact along an interface (I; I');
laminating the arrangement of the base substrate (BS; BS') and the first overlay sheet layer (1; 1'), wherein the first and second elastic plug sections (TP1, TP2; TPa1, TPa2) are bonded together at the interface (I; I') between the base substrate (BS; BS') and the first overlay sheet layer (1; 1') to form a elastic plug portion extending through the base substrate recess (6; 6') and the first recess (7; 7'),
wherein the base substrate recess (6; 6') is of a bigger size compared to the first recess (7; 7') such that the base substrate recess (6; 6') completely overlaps the first recess (7; 7').

14. The method of claim 13, wherein the elastic plug (TP; TPa) is formed of a thermoplastic elastomer material, such as thermoplastic polyurethane, and/or a PET material, such as woven PET, and/or
wherein at least one of the base substrate (BS; BS') and/or the first overlay layer (1; 1') may comprise a polymer material, such as polycarbonate.

15. The method of claim 13 or 14, further comprising:
providing a second overlay sheet layer (2; 2');
cutting out a second recess (8; 8') in the second overlay sheet layer (2; 2'), the second recess (8; 8') completely extending through the second overlay sheet layer (2; 2');
arranging the second overlay sheet layer (2; 2') in an assembly fixture;
providing the base substrate (BS; BS') and arranged the base substrate (BS; BS') within the assembly fixture on the second overly sheet layer (2; 2') such that the base substrate recess (6; 6) is in alignment with the second recess (8; 8');
inserting the second elastic plug section (TP2; TPa2) in the base substrate recess (6; 6') and the second recess (8; 8');
stacking the first overlay sheet layer (1; 1') over the the base substrate (BS; BS') in the assembly fixture; and
inserting the second elastic plug section (TP2; TPa2) into the first recess (7; 7') on top of and in contact with the second elastic plug section (TP1; TPa1),
wherein the second recess (8; 8') is of a smaller size compared to the base substrate recess (BS; BS') such that the base substrate recess (6; 6') completely overlaps the second recess (8; 8').

16. The method of claim 15, wherein the first and second recesses (7, 8; 7', 8') are congruent or substantially congruent.

17. The method of one of claims 13 to 16, further comprising after inserting the second elastic plug section (TP2; TPa2):
providing a external sheet layer (5; 5');
cutting out a third recess (9; 9') into the external sheet layer (5; 5'), the third recess (9; 9') completely extending through the external sheet layer (5; 5'); and
arranging the external sheet layer (5; 5') in the assembly fixture on the first overlay sheet layer (1; 1') such that the second elastic plug section (TP2; TPa2) is inserted into the third recess (9; 9'),
wherein the third recess (9; 9') is of a smaller size compared to the first recess (7; 7').

18. A method of forming a smart card (ID1b; ID2b) for a data page (DP) of an identity document (D), comprising:
forming a prelam body (P1; P1b; P2b; PB) in accordance with the method of one of claims 13 to 17; and
forming additional layers (Lu1b, Ld1b; Lu2b, Ld2b) over the prelam body (P1; P1b; P2b; PB), the prelam body (P1; P1b; P2b; PB) being interposed between the additional layers (Lu1b, Ld1b; Lu2b, Ld2b).

19. The method of claim 18, wherein the additional layers (Lu1b, Ld1b, Lu2b, Ld2b) are formed of a transparent and/or translucent material, such as a thermoplastic polymer, with preferably transparent or translucent properties, preferably a transparent and/or translucent PC and/or transparent and/or translucent PVC; and/or
wherein each of the additional layers (Lu1b, Ld1b, Lu2b, Ld2b) has a thickness in the range from about 25 µm to about 150 µm; and/or
wherein a number of additional layers (Lu1b, Ld1b, Lu2b, Ld2b) is determined together with an appropriate thickness so as to provide the smart card (ID1b; ID2b) with a thickness in the range for about 450 µm to about 550 µm, such as a thickness of about 500 µm.

20. A method of forming an identity document (D), comprising:
preparing a smart card (ID1b; ID2b) in accordance with the method of one of claims 18 to 19; and
integrating the smart card (ID1b; ID2b) as a data page (DP) of the document (D) into the document (D) by coupling the thermal elastomer plug (TP; TPa; TPHP) to a hinge of the document (D).
